(19) Europäisches Patentamt
European Patent Office
Office européen des brevets

(11) **EP 3 191 805 B1**

(12) **EUROPÄISCHE PATENTSCHRIFT**

(45) Veröffentlichungstag und Bekanntmachung des Hinweises auf die Patenterteilung:
**01.01.2020   Patentblatt 2020/01**

(21) Anmeldenummer: **15753029.6**

(22) Anmeldetag: **19.08.2015**

(51) Int Cl.:
*G01F 23/00* (2006.01)          *G01F 23/40* (2006.01)
*G01F 25/00* (2006.01)

(86) Internationale Anmeldenummer:
**PCT/EP2015/069049**

(87) Internationale Veröffentlichungsnummer:
**WO 2016/037816 (17.03.2016 Gazette 2016/11)**

(54) **FUNKTIONSDIAGNOSE EINES ELEKTROMECHANISCHEN FÜLLSTANDSMESSGERÄTS**

OPERATION DIAGNOSIS OF AN ELECTROMECHANICAL LEVEL METER

DIAGNOSTIC DE LA FONCTION D'UN COMPTEUR DE NIVEAU ÉLECTROMÉCANIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.09.2014   DE 102014113082**
**08.12.2014   DE 102014118067**

(43) Veröffentlichungstag der Anmeldung:
**19.07.2017   Patentblatt 2017/29**

(73) Patentinhaber: **Endress+Hauser SE+Co. KG**
**79689 Maulburg (DE)**

(72) Erfinder:
 • **KAMEI, Yoichi**
**Yamanashi, Yamanashi 400-0805 (JP)**
 • **KAISER, Andreas**
**79674 Todtnau (DE)**
 • **SPANKE, Dietmar**
**79585 Steinen (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
WO-A2-2006/004849          DE-A1- 1 961 625
DE-A1- 2 544 038            DE-U1-202004 018 047
DE-U1-202004 018 047        US-A- 4 013 194
US-A1- 2002 038 571         US-A1- 2005 210 963

**Beschreibung**

Die Erfindung betrifft ein Verfahren zum Betreiben eines elektromechanischen Füllstandsmessgeräts mit einer Funktionsdiagnose.

Verfahren und Vorrichtungen zur Füllstandmessung, die nach dem Senklotprinzip arbeiten, sind hinlänglich bekannt. Beispielsweise sind in den Dokumenten DE 21 51 094, DE 24 01 486 B2, DE-PS 819 923, DE 39 42 239 A1, US-PS 3,838,518, DE 195 43 352 A1, G 70 31 884.2, DE-PS 819 923, G 73 29 766.2, DE 19730196 A1, sowie DE 28 53 360 A1 Füllstandsmesssysteme zur hochgenaue Füllstandsbestimmung beschrieben, die nach dem Senklotprinzip arbeiten. Bei diesen Verfahren zur Füllstandmessung nach dem Senklotprinzip wird ein an einem Messseil hängendes Senklot auf das Füllgut bzw. Schüttgut abgesenkt. Beim Auftreffen auf das Füllgut wird die von der Seiltrommel abgespulte Länge des Messseiles ermittelt und an einer Anzeigevorrichtung die Füllstandshöhe bzw. die Füllmenge angezeigt. Für unterschiedliche Füllgüter werden zweckmäßigerweise unterschiedliche Senklote eingesetzt.

Das Hauptanwendungsgebiet der elektromechanischen Lotung liegt in der Füllstandmessung von sehr hohen Behältern, wo Lösungen mit anderen Messprinzipien sehr kostenintensiv oder aus physikalischen Gründen nicht möglich sind. Mit der elektromechanischen Lotung sind Füllstände in Behältern von derzeit bis zu etwa 70 m Höhe mit einer Genauigkeit von unter einem Millimeter messbar.

Konkret basiert das Funktionsprinzip von elektromechanischen Füllstandsmessgeräten nach dem Stand der Technik darauf, dass ein Verdrängerelement am Messdraht in das Füllgut im Behälter abgelassen wird. Im abgelassenen Zustand wird in einem Gleichgewichtszustand die Gewichtskraft des Verdrängerelements abzüglich einer von zumindest einem Gleichgewichtsvolumen abhängige Auftriebskraft des Verdrängerelements gleich einer resultierenden Gewichtskraft des Verdrängerelements ermittelt. Dabei wird die resultierende Gewichtskraft vom Gerät vorgegeben und mittels entsprechender Änderung der Länge des Messdrahtes in dem Gleichgewichtszustand konstant gehalten. Mittels der Länge des abgelassenen Messdrahtes wird im Anschluss der Füllstand des Füllguts ermittelt. Entsprechende Füllstandsmessgerätes sind unter anderem in den Veröffentlichungsschriften US 2005/210963 A1, US 2002/038571 A1, DE 2544038 A1, DE 202004018047 U1 und DE 1961 625 A1 beschrieben.

Weitere Vorrichtungen zur Flüssigkeitsniveaumessung und Dichtebestimmung, die nach dem Verdrängungsmessprinzip arbeiten, sind aus der DE 37 21164 A1, DE2853360A1, DE 2401486 B2 und DE 2659416 A1 bekannt geworden.

Aus der DE2853360A1 ist ein Flüssigkeitsniveaumesser mit einem Verdrängungskörper bekannt. Dieser Verdrängungskörper ist mit einem Draht versehen, der auf einer Trommel auf- bzw. abgewickelt werden kann. Die Trommel wird durch eine Welle mit Hilfe eines Motors angetrieben, wobei eine Einrichtung zur Ermittlung der Veränderung des auf die Welle ausgeübten Drehmoments vorgesehen ist.

In der DE 2659416 A1 wird eine Vorrichtung zum Messen eines Flüssigkeitsspiegels beschrieben, bei welcher die Änderung des Flüssigkeitsspiegels in eine Drehbewegung umgesetzt wird. Ferner ist ein Magnetkopf an einem Arm vorgesehen, der sich entsprechend der Änderung des Flüssigkeitsspiegels dreht und dabei Magnetfelder abtastet, die durch am Umfang einer Scheibe angeordnete elektrische Leiter hervorgerufen werden.

Die DE 2401486 B2 offenbart ein Füllstand-Anzeigegerät nach dem Verdrängungsmessprinzip, bei dem ein Seil auf einer Trommel ab- oder aufgewickelt wird, wobei eine Zählscheibe mitgedreht wird und dabei über Schutzgas-Kontaktschalter eine fortlaufende Impulsserie erzeugt, die ein Maß der gespendeten Seillänge ist.

Die WO2012/040017 A2 beschreibt ein Verfahren zur Überprüfung eines elektromechanischen Füllstandsmessgeräts, in dem in einem Testmodus das Drehmoment mit der Messtrommel bestimmt wird und ein mechanisches Problem festgestellt wird, wenn das gemessene Drehmoment einen oberen vorgegebenen Wert überschreitet oder wenn das gemessene Drehmoment einen unteren vorgegebenen Wert unterschreitet. Der Testmodus wird initiiert zwischen zwei Messungen im Messmodus ausgeführt, so dass der Messbetrieb bei diesem Verfahren unterbrochen werden muss. Desweitern ist bei dieser Methode von Nachteil, dass der Testmodus eine lange Testzeit in Anspruch nimmt in der keine Messergebnisse geliefert werden.

Aus der DE 37 21164 A1 ist ein Füllstandsmessgerät bekannt, das einen Schwimmer an einem Draht enthält, der auf der Oberfläche einer nicht veranschaulichten Flüssigkeit schwimmt. Der Draht ist auf einer Trommel aufgewickelt und kann auf diese Trommel aufgespult oder von ihr abgespult werden. Mit dem Boden der Trommel ist eine Messwelle verbunden. Ändert sich das Flüssigkeitsniveau, auf dem der Schwimmer schwimmt, so ändert sich damit auch die vom Draht auf die Trommel ausgeübte Spannung. Diese Änderung der vom Draht ausgeübten Spannung wird über einen als Kupplungsteil wirkenden äußeren Magnetring in ein Drehmoment der Messwelle umgesetzt. Der zylindrische äußere Magnetring ist im Inneren der Trommel mit dem Boden verbunden. Magnetpole Süd- und Nordpole sind in Umfangsrichtung des äußeren Magnetringes abwechselnd angeordnet. An dem mit der Messwelle verbundenen inneren Magnetring sind magnetische Nord- und Südpole in gleicher Anzahl wie am äußeren Magnetring abwechselnd ausgebildet. Ein elektromagnetischer Wandler, z.B. ein Hall-Element ist am äußeren Umfang des inneren Magnetringes im Grenzbereich zwischen unterschiedlichen Magnetpolen angeordnet. Wird bei einer Änderung des zu messenden Flüssigkeitsniveaus eine Kraft erzeugt, die eine Relativbewegung zwischen dem äußeren und inneren Magnetring verursacht, so bewirkt eine Änderung des zwischen dem äußeren und inneren Magnetring vorhandenen magnetischen Flusses im elektromagnetischen Wandler ein elektrisches Signal, durch dass die Messwelle so gedreht wird, dass die Relativbewegung zwischen dem inneren und äußeren Magnetring wieder auf null zurückgeführt und hierbei ein Messwert des erreichten Flüssigkeitsstandes gewonnen wird. Über einen an der Messwelle befindlichen Schleifkontakt wird das elektrische Signal des elektromagnetischen Wandlers in der Inneren Trommel an die Servomotorsteuerung übertragen. Dieser mechanische Abgriff hat den Nachteil, dass dieser nicht verschleißfrei erfolgt.

Der Erfindung liegt die Aufgabe zugrunde ein Verfahren zur Funktionsdiagnose einer Füllstandmessung nach dem Verdrängungsmessprinzip anzugeben, das einen automatisch ausgeführten Funktionstest während des Messbetriebs ermöglicht, ohne die Messung bzw., den Messbetrieb zu unterbrechen, sowie einfach umzusetzen ist.

Diese Aufgabe wird gelöst mittels einem Verfahren gemäß dem Patentanspruch 1, beinhaltend einen Verfahrensschritt zur Funktionsdiagnose eines elektromechanischen Füllstandsmessgeräts bei dem ein Verdrängerelement an einem Messdraht in eine Flüssigkeit in einen Behälter abgelassen wird, so dass in einem Gleichgewichtszustand die Gewichtskraft des Verdrängerelements abzüglich einer von zumindest einem Gleichgewichtsvolumen abhängige Auftriebskraft des Verdrängerelements gleich einer resultierende Gewichtskraft des Verdrängerelements ermittelt wird, wobei die resultierende Gewichtskraft vorgegeben wird und die vorgegebene, resultierende Gewichtskraft mittels entsprechender Änderung der Länge des Messdrahtes in dem Gleichgewichtszustand konstant gehalten wird, wobei mittels der Länge des abgelassenen Messdrahtes der Füllstand der Flüssigkeit ermittelt wird, wobei zur Funktionsdiagnose der vorgegebene Wert des Gleichgewichtsvolumens des Verdrängerelements mittels einer definierten Gleichgewichtsvolumenänderung variiert wird und die daraus resultierende Änderung der Länge des Messdrahtes, aufgrund des konstant gehaltenen Gleichgewichtszustandes der resultierenden Gewichtskraft ermittelt wird.

Gemäß der Erfindung wird der vorgegebene Wert des Gleichgewichtsvolumens des Verdrängerelements über die definierte Gleichgewichtsvolumenänderung verändert, indem ein Parameter des Gleichgewichtsvolumens in einem Auswertungsalgorithmus des elektromechanischen Füllstandsmessgeräts verändert wird.

Durch die entsprechende Änderung der Länge des einlagig auf einer Messtrommel aufgewickelte Messdrahtes wird eine Änderung des Drehmoments an der Messtrommel verursacht, woraus eine Änderung der resultierenden Gewichtskraft von dem Auswertungsalgorithmus ermittelt wird.

Gemäß einem ersten vorteilhaften Ausführungsbeispiels des erfindungsgemäßen Verfahrens wird die definierte Gleichgewichtvolumenänderung in einem Schritt ausgeführt, wodurch eine entsprechend große Änderung der Länge des Messdrahtes bzw. eine entsprechend große Höhenänderungen der Eintauchtiefe des Verdrängerelements in der Flüssigkeit verursacht werden, die größer oder gleich der kleinstmögliche Auflösung der Messung des Füllstands des elektromechanischen Füllstandsmessgeräts ist, und die dadurch verursachte großen Änderungen des Messwertes des Füllstandes von dem Auswertungsalgorithmus entsprechend kompensiert werden.

Gemäß einem zweiten ergänzenden Ausführungsbeispiels des erfindungsgemäßen Verfahrens wird die Gleichgewichtvolumenänderung in sehr kleinen Einzelschritten ausgeführt wird, wodurch entsprechend sehr kleine Änderung der Länge des Messdrahtes bzw. sehr geringe Höhenänderungen des Verdrängerelements verursacht werden, die kleiner als die kleinstmögliche Auflösung der Messung des Füllstandes des elektromechanischen Füllstandsmessgeräts ist, und somit die Ermittlungen des Füllstandes durch dem Auswertungsalgorithmus nicht beeinflusst werden.

Gemäß einer weiteren Weiterbildung des zweiten Ausführungsbeispiels wird die Anzahl der kleinen Einzelschritte von dem Auswertealgorithmus berechnet, indem aus Gleichgewichtvolumenänderung unter Kenntnis der Querschnittsfläche des Verdrängerelements die Höhenänderung ermittelt und die Anzahl der kleinen Einzelschritte größer als der Quotient aus Höhenänderung durch die kleinstmögliche Auflösung der Messung des Füllstandes bestimmt werden.

Gemäß einer weiteren Ergänzung des zweiten Ausführungsbeispiels werden kleine Einzelschritte zu Höhenänderungen in einem Bereich des Verdrängungselements zwischen einer Oberen Grenze und einer unteren Grenze des Gleichgewichtsvolumens, bei dem die Querschnittsfläche des Verdrängungselements konstant ist, durchgeführt.

Gemäß einer weiteren Fortbildung des zweiten Ausführungsbeispiels werden die Höhenänderungen mit unterschiedlich kleinen Einzelschritten mit unterschiedlicher Schritthöhe ausgeführt.

Gemäß einer weiteren Vervollständigung des zweiten Ausführungsbeispiels wird die Funktionsdiagnose durch den Auswertungsalgorithmus während des Messbetriebs des elektromechanischen Füllstandsmessgeräts kontinuierlich durchgeführt und diese gegenseitig nicht beeinflusst werden, indem das Verdrängungselement stetig um die Höhenänderungen in kleinen Einzelschritten abgesenkt und angehoben wird.

Gemäß einer weiterführenden Ausgestaltung der Ausführungsbeispiele werden mittels dieser Funktionsdiagnose des elektromechanischen Füllstandsmessgeräts die Bewegung des Servomotors, die Gewichtsmessung des Verdrängungselementes, die Bewegung der Messtrommel und des Verdrängungselementes, eingegebenen Parameter zum aktuell am Messdraht angehängten Verdrängungselement, die Sensorelektronik, die Hauptelektronik und den Auswertungsalgorithmus überprüft und überwacht. Die Sensorik wird überprüft in dem das Gewicht variiert wird und dadurch z.B. das Einfrieren des Messwertes detektiert werden kann.

Weitere Einzelheiten, Merkmale und Vorteile des Gegenstandes der Erfindung ergeben sich aus der nachfolgenden Beschreibung mit den zugehörigen Zeichnungen, in denen bevorzugte Ausführungsbeispiele der Erfindung dargestellt sind. In den Figuren dargestellte Ausführungsbeispiele der Erfindung sind zur besseren Übersicht und zur Vereinfachung die Elemente, die sich in ihrem Aufbau und/oder in ihrer Funktion entsprechen, mit gleichen Bezugszeichen versehen. Es zeigen:

Fig. 1 ein Ausführungsbeispiel eines Messgeräts zur Ermittlung des Füllstands nach dem Verdrängungsmessprinzip,

Fig. 2 ein schematisches Blockschaltbild eines elektromechanischen Füllstandsmessgeräts,

Fig. 3 eine schematische Zeichnung zur Auftriebskraft des Verdrängerelements,

Fig. 4 eine schematische Zeichnung der erfindungsgemäßen Variation des Gleichgewichtsvolumens des Verdrängerelements

Fig. 5 eine schematische Zeichnung der erfindungsgemäßen Variation des Gleichgewichtsvolumens des Verdrängerelements in kleinen Schritten.

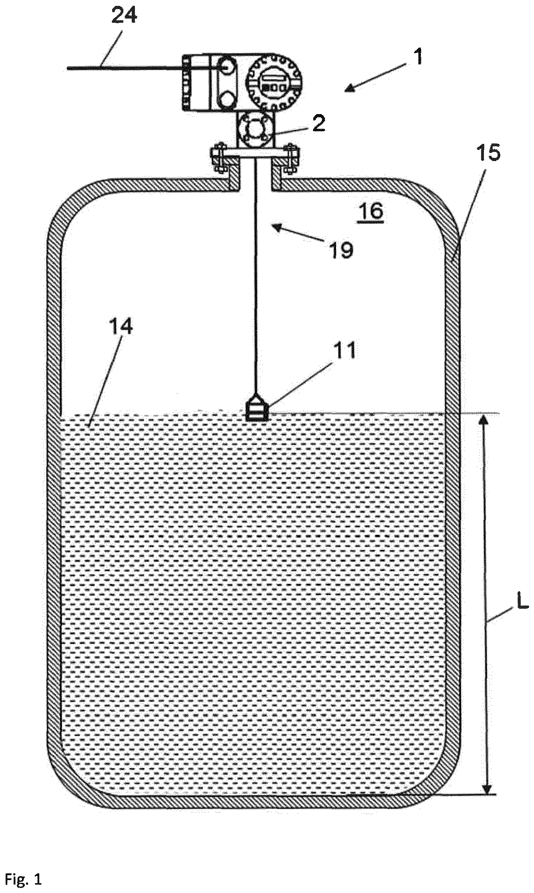

In Fig. 1 ist ein mechanisches Füllstandsmessgerät 1 gezeigt, das beispielsweise von der Anmelderin unter dem Namen PROSERVO NMS 53x - Tankmesssystem vertreiben wird und auf dem Prinzip der Verdrängungsmessung eines Verdrängerelements 11 basiert. Ein kleines Verdrängerelement 11 wird mit Hilfe eines Servomotors 3 an einem Messseil 19 präzise in der Flüssigkeit 14 im Behälter 15 positioniert. Sobald der Füllstand L der Flüssigkeit 14 im Behälter 15 steigt oder fällt, wird die Position des Verdrängerelements 11 vom Servomotor 3 durch drehen der Messwelle 10 mit der Messtrommel 27, 12, 13 nachgeführt. Die Drehung der Messtrommel 27, 12, 13 wird ausgewertet um den Füllstand 16 zu ermitteln. Auch die Ermittlung weiterer Messgrößen wie Trennschicht- und Dichtemessung der einzelnen Schichten der Fllüssigkeit 14 kann mit diesem Messprinzip durchgeführt werden.

In modernen Industrieanlagen sind Feldgeräte in der Regel über Bussysteme 24, wie beispielsweise über Profibus® PA, Foundation Fieldbus® oder HART® mit zumindest einer übergeordneten Steuereinheit, die hier nicht explizit gezeigt ist, verbunden. Die von der Steuereinheit gesteuerte Datenkommunikation auf dem Bussystem 24 kann sowohl drahtgebunden als auch drahtlos erfolgen. Normalerweise handelt es sich bei der übergeordneten Steuereinheit um eine SPS bzw. eine PLC (Programmable Logic Controller) oder um eine DCS (Distributed Control System). Die übergeordnete Steuereinheit dient zur Prozesssteuerung, zur Prozessvisualisierung, zur Prozessüberwachung sowie zur Inbetriebnahme und Bedienung der Feldgeräte.

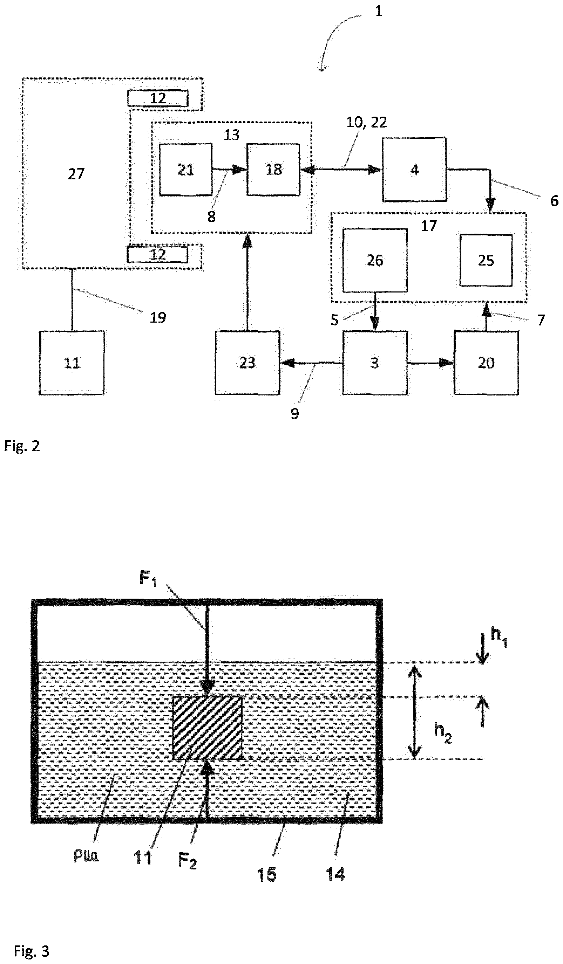

In Fig. 2 ist ein Blockschaltbild eines Füllstandsmessgeräts 1 gezeigt, welches nach dem Verdrängungsmessprinzip eines Verdrängerelements bzw. Schwimmers 11 arbeitet. Das Verdrängerelement bzw. der Schwimmer 11 ist an einem Ende eines Messseils bzw. Messdrahtes 19 befestigt und das andere Ende des Messseils 19 ist meist einlagig auf einer äußeren Seiltrommel 12 bzw. äußeren Messtrommel 27 aufgewickelt.

Ein kleines Verdrängerelement 11 wird mit Hilfe eines kleinen Servomotors 3 präzise in der Flüssigkeit bzw. in dem flüssigen Füllgut 14 bei einer Grenzfläche des Gleichgewichtvolumens $V_B$ positioniert. Das Verdrängungselement 11 hängt an einem Messdraht bzw. -seil 19, der auf eine mit feinen Rillen versehene Messtrommel 27 bzw. äußere Seiltrommel 12 im Innern des Messgeräts 1 mit gleich bleibendem Wicklungsdurchmesser einlagig aufgewickelt ist. Die äußere Seiltrommel 12 wird beispielsweise über Koppelmagnete mit der inneren Seiltrommel 13 gekoppelt, die durch das Trommelgehäuse vollständig und hermetisch dicht voneinander räumlich getrennt sind. Die äußeren Magneten sind mit der äußeren Seiltrommel 12 verbunden, die inneren Magneten mit der inneren Seiltrommel 13. Während sich die Magneten drehen, veranlasst die magnetische Anziehungskraft die äußeren Magneten, sich mitzudrehen, so dass die gesamte Trommelbaugruppe aus äußerer Seiltrommel 12 und innerer Seiltrommel 13 auf der Messwelle 10 rotiert.

Während sich die Magnete mit der inneren Seiltrommel 13 drehen, veranlasst die magnetische Anziehungskraft, dass sich die äußeren Magnete auf der äußeren Seiltrommel 12 mitdrehen, sodass die gesamte Trommelbaugruppe rotiert. Durch das Gewicht des Verdrängerelements 11 am Messdraht 19 wirkt ein Drehmoment auf den äußeren Magneten, wodurch es zu einer Änderung des magnetischen Flusses kommt. Diese zwischen den Komponenten der Messtrommeln 12, 13 wirkenden Magnetfeld-Änderungen werden von einem speziellen elektromagnetischen Messwandler 21, z. B. einem Hallsensor, auf der Inneren Messtrommel 13 erfasst. Das Messwandlersignal 8 wird von der Sensorelektronik 18 in ein Gewichtsmesssignal 6 weiterverarbeitet. Das Gewichtsmesssignal 6 der Sensorelektronik 18 wird über Sensorsignalleitungen 22 entlang der Messwelle 10 zu einem Schleifkontakt und/oder Rotationstransformer 4 geführt, und an der Hauptelektronik 17 weitergeleitet. Diese Gewichtsmesssignal 6 wird mit dem Positionsdatensignal 7 eines auf einer Antriebsmotorsachse befindlichen Enkoders bzw. Kodieres 20 von einem Mikroprozessor 25 in der Hauptelektronik 17 ausgewertet. Ein entsprechendes Motorsteuersignal 5 wird von einer Motorsteuerelektronik an den Antriebsmotor 3 übermittelt. Der Antriebsmotor 3 wird so von dem Motorsteuersignal 5 angesteuert, dass die durch die Änderungen des magnetischen Flusses erzeugte Spannung an dem Messwandler 21 an die durch den Betätigungsbefehl vorgegebene Spannung angeglichen wird. Wenn sich das Verdrängerelement 11 absenkt und auf der Oberfläche der Flüssigkeit 14 aufsetzt, wird das Gewicht des Verdrängerelements 11 durch die Auftriebskraft $F_B$ der Verdrängerelements 11 der Flüssigkeit 14 vermindert. Dadurch ändert sich das Drehmoment in der Magnetkupplung zwischen der äußeren Seiltrommel 12 bzw. Messtrommel 27 und der inneren Seiltrommel 13. Diese Änderung wird beispielsweise von fünf temperaturkompensierten Hall-Detektor-Chips als Messelement 21 gemessen. Das Positionsdatensignal 7, das die Position des Verdrängerelements 11 anzeigt, wird an die Motorsteuerelektronik 26 in der Hauptelektronik 17, z.B. einen Mikroprozessor 25, übertragen. Sobald der Stand der Flüssigkeit 14 steigt und fällt, wird die Position des Verdrängerelements 11 vom Antriebsmotor 3 mittels eines Getriebes 23 und den Servomotor 3 nachgeführt. Die Drehung der Messtrommel 27 wird zumindest aus dem Positionsdatensignal 7 und dem Gewichtsmesssignal 6 genau ausgewertet, um den Füllstandswert 16 bis auf +/- 0,7 mm genau zu ermitteln.

Diese Ausgestaltung eines elektromechanischen Füllstandsmessgeräts 1 mit einem an der Messwelle 10 befindlichen Schleifkontakt zur Übertragung eines elektrischen Messwandlersignals 8 der elektromagnetischen Messwandlers 21 in der Inneren Seiltrommel 13 an die Hauptelektronik 17, insbesondere die Servomotorsteuerelektronik 26 hat den Nachteil, dass dieser mechanische Abgriff des Messwandlersignals 8 über die Schleifkontakte nicht verschleißfrei erfolgt und durch Reibungswiderstände eine Drehmomentsänderung erzeugt und somit Messungenauigkeiten auftreten können. Deshalb ist es vorteilhaft zur Übertragung des elektrischen Messwandlersignals 8 die Sensorelektronik 18 an die innere Seiltrommel 13 anzuordnen, und beispielsweise einen induktiven Rotationstransformator 4 einzusetzen. Dieser Rotationstransformator 4 überträgt ein digitales Gewichtsmesssignal 6 von der Sensorelektronik 18 an die Hauptelektronik 17, insbesondere den Mikroprozessor 25. Aufgrund der guten Übertragungseigenschaften des radialen Rotationstransformators 4 des Gewichtsmesssignals 6 und in Gegenrichtung die Möglichkeit der zuverlässigen Energieversorgung der Sensorelektronik 18 durch die Hauptelektronik 17 ist es möglich die Sensorelektronik 18 direkt innerhalb der inneren Seiltrommel 13 nahe bei den Messelementen 21 auszugestalten. Dadurch wird eine exaktere Auswertung der Messelemente 21, insbesondere der Hall-Sensoren, und eine Vorverarbeitung der Messwerte der Messelemente 21 ermöglicht.

In Fig. 3 ist eine schematische Zeichnung zur Herleitung der Auftriebskraft $F_B$ des Verdrängerelements 11 gezeigt. Wird ein Verdrängerelement 11 in eine Flüssigkeit 14 eingetaucht ändert sich die resultierende Gewichtskraft $F_{res}$ am Messdraht 19 aufgrund der auf das Verdrängerelement 11 einwirkenden Auftriebskraft $F_B$. Die Auftriebskraft $F_B$ lässt sich durch die folgenden Berechnungen herleiten:

$$F_B = F_{res} - F_g = A * p_2 - A * p_1 = A(p_2 - p_1)$$

Die Auftriebskraft $F_B$ ist eine der Schwerkraft $F_g$ entgegengesetzte resultieren Gewichtskraft $F_{res}$ auf ein Verdrängerelement 11 in Flüssigkeiten oder Gasen 14.

$$p_{liq} = \rho_{liq} * g * h$$

Der Druck $p_{liq}$ in der Flüssigkeit 14 lässt sich über das Produkt der Dichte $\rho_{liq}$ der Flüssigkeit 14, der Höhe h und der Schwerebeschleunigung g bestimmen. Woraus sich eine von der gesamt Eintauchtiefe $h_2$ und Untertauchtiefe $h_1$ abhängige Formel für die Auftriebskraft $F_B$ herleiten lässt.

$$F_B = A * \rho_{liq} * g * (h_2 - h_1)$$

Das Gleichgewichtsvolumen $V_B$ des Verdrängerelements 11 ergibt sich aus der Differenz der gesamt Eintauchtiefen $h_2$ und Untertauchtiefe $h_1$ multipliziert mit der Querschnittsfläche A der Verdrängerelements 11.

$$V_B = A * (h_2 - h_1)$$

Daraus ergibt sich eine Formel für die Auftriebskraft $F_B$

$$F_B = \rho_{liq} * g * V_B$$

Das resultierende Gewicht $m_{res}$ des Verdrängerelements 11, wenn dieses in der Flüssigkeit 14 ausbalanciert eingetaucht ist ergibt aus den folgenden Formel:

$$F_{res} = F_{Disp} - F_B$$

$$F_{res} = m_{Disp} * g - \rho_{liq} * g * V_B$$

$$m_{res} = m_{disp} - \rho_{liq} * V_B$$

Für jedes Verdrängerelement 11 wird als Parameter ein Gleichgewichtsvolumen $V_B$ angegeben, bei dem das Verdrängerelement 11 in der Regel zur Hälfte in Medium eintaucht. Gibt man also dem elektromechanischen Füllstandsmessgerät 1 die Parameter des Gleichgewichtvolumens $V_B$ und die Dichte $\rho_{liq}$ der Flüssigkeit 14 vor, kann die Auswerteelektronik mittels des Auswertealgorithmus das resultierende Gewicht $m_{res}$ des Verdrängerelements 11 bestimmen und das Verdrängerelement entsprechend der Untertauchtiefe $h_1$ ausbalancieren.

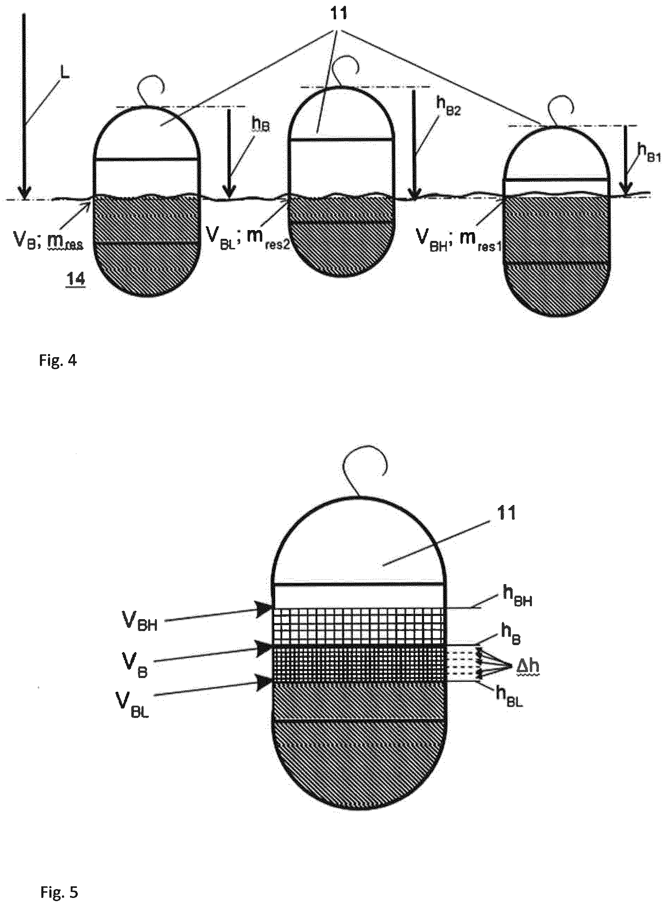

In Fig. 4 und Fig. 5 sind schematische Zeichnungen der erfindungsgemäßen Variation des Gleichgewichtsvolumens $V_B$ des Verdrängerelements 11 gezeigt. Zur Funktionsdiagnose des elektromechanischen Füllstandsmessgeräts kann beispielsweise die Bewegung des Servomotors 3, das resultierende Gewicht $m_{res}$ des Verdrängungselementes 11, die Bewegung der Messtrommel 27 und des Verdrängungselementes 11 und Überprüfung eingegebener Parameter zum aktuell am Messdraht 19 angehängten Verdrängungselement 11 überprüft und überwacht werden. Bei der erfindungsgemäßen Funktionsdiagnose wird hierzu am elektromechanischen Füllstandsmessgerät 1 während der Füllstandmessung der Parameter des Gleichgewichtsvolumens $V_B$ verändert. Wenn das Gleichgewichtsvolumens $V_B$ beispielsweise in einem einzigen Schritt oder in kleinen Einzelschritten dn bis zu einer oberen Grenze des Gleichgewichtvolumens $V_{BH}$ erhöht wird, verringert sich das resultierende Gewicht $m_{res}$ auf ein erstes resultierendes Gewicht $m_{res1}$ bei der oberen Grenze, wodurch das Verdrängerelement 11 bis zu einer ersten, ausgehend von der Oberkante des Verdrängerelements 11 gemessenen Höhe $h_{B1}$ abgesenkt wird, bis das gemessene resultierende Gewicht $m_{res}$ gleich dem ersten resultierenden Gewicht $m_{res1}$ bei der oberen Grenze ist. Wenn hingegen das Gleichgewichtsvolumen $V_B$ beispielsweise in einem einzigen Schritt oder in kleinen Einzelschritten dn bis zu einer unteren Grenze des Gleichgewichtvolumens $V_{BL}$ erniedrigt wird, erhöht sich das resultierende Gewicht $m_{res}$ auf ein zweites resultierendes Gewicht $m_{res2}$ bei der unteren Grenze, wodurch das Verdrängerelement 11 wiederum bis zu einer zweiten, ausgehend von der Oberkante des Verdrängerelements 11 gemessenen Höhe $h_{B2}$ angehoben wird, bis das gemessene resultierende Gewicht $m_{res}$ gleich dem zweiten resultierenden Gewicht $m_{res2}$ bei der unteren Grenze ist.

Damit die Sprünge im Messsignal der resultierenden Gewichtskraft $F_{res}$ bzw. dem resultierenden Gewicht $m_{res}$ klein sind wird die Gleichgewichtvolumenänderung $\Delta V_B$ in sehr kleinen Einzelschritten dn ausgeführt, wodurch entsprechend sehr kleine Änderung der Länge des Messdrahtes 19 bzw. sehr geringe Höhenänderungen $\Delta h$ des Verdrängerelements 11 verursacht werden, die kleiner als die kleinstmögliche Auflösung der Messung des Füllstandes L des elektromechanischen Füllstandsmessgeräts sind, und somit die Ermittlungen des Füllstandes L und/oder des resultierenden Gewichts $m_{res}$ durch dem Auswertungsalgorithmus nicht beeinflusst werden.

Hierzu wird das Gleichgewichtsvolumen VB in kleinen Einzelschritten dn, mit beispielsweise einer gleichen Schritthöhe dh oder aber auch mit einer unterschiedlicher Schritthöhe dh1, dh2 im Bereich einer oberen Grenze des Gleichgewichtsvolumenhöhe $h_{BH}$ und einer unter Grenze des Gleichgewichtsvolumenhöhe $h_{BL}$ verändert.

Der Auswertealgorithmus kann die Anzahl der kleinen Einzelschritte dn berechnen, indem er aus der Gleichgewichtvolumenänderung $\Delta V_B$ unter Kenntnis des Querschnittsfläche A des Verdrängerelements 11 die Höhenänderung $\Delta h$ ermittelt. Diese Höhenänderung $\Delta h$ kann beispielsweise weniger als 10 Millimeter betragen. Die Anzahl der kleinen Einzelschritten dn wird so gewählt, dass der Quotient aus der Höhenänderung $\Delta h$ durch die kleinstmögliche Auflösung des Auswertealgorithmus des elektromechanischen Füllstandmessgeräts 1 kleiner ist. Die kleinste Auflösung des Auswertealgorithmus des elektromechanischen Füllstandmessgeräts 1 kann beispielsweise, wie zuvor beschrieben, kleiner als 0,7 Millimeter angegeben werden. Die Anzahl der kleinen Einzelschritte dn des Auswertealgorithmus zur Funktionsdiagnose muss größer sein als die Anzahl der Schritte die zur Höhenänderung $\Delta h$ mit der kleinstmögliche Auflösung des Auswertealgorithmus des elektromechanischen Füllstandmessgeräts 1 als Schrittgröße notwendig wären. Gemäß den Beispielwerten kann bei einer Höhenänderung $\Delta h$ von 10 Millimeter und bei einer kleinsten Auflösung des Auswertealgorithmus von 0,7 Millimeter die Anzahl der kleinen Einzelschritte dn von zumindest 15 Schritten betragen. Dadurch beeinflusst der Auswertealgorithmus der Funktionsdiagnose nicht den Auswertungsalgorithmus des Messbetriebs des elektromechanischen Füllstandsmessgeräts 1, da das Verdrängungselement 11stetig um die Höhenänderungen $\Delta h$ in kleinen Einzelschritten dn abgesenkt und angehoben wird und diese Änderungen außerhalb des Auflösungsvermögend der Auswerteelektronik bzw. des Auswertealgorithmus des elektromechanischen Füllstandsmessgeräts 1 liegen.

**Bezugszeichenliste**

| 1 | Füllstandsmessgerät |
|---|---|
| 2 | Sensorgehäuse |
| 3 | Schrittmotor, Servomotor, Antriebsmotor |
| 4 | Radialer Rotationstransformator |
| 5 | Motorantriebssignal, Motorsteuersignal |
| 6 | Gewichtsmesssignals |
| 7 | Positionsdatensignal |
| 8 | Messwandlersignal |
| 9 | Antriebswelle |
| 10 | Messwelle |
| 11 | Verdrängerelement, Schwimmer |
| 12 | Äußere Seiltrommel |
| 13 | Innere Seiltrommel |
| 14 | Füllgut, Medium, Flüssigkeit, Gase |
| 15 | Behälter |
| 16 | Meßraum |
| 17 | Hauptelektronik |
| 18 | Sensorelektronik |
| 19 | Messseil, Messdraht |
| 20 | Kodierer, Encoder |
| 21 | Messelement, Messwandler |
| 22 | Sensorsignalleitungen |
| 23 | Getriebe |
| 24 | Feldbus, Zweidrahtleitung |
| 25 | Mikroprozessor, Auswerte- und Steuereinrichtung |
| 26 | Motorsteuerelektronik |
| 27 | Meßtrommel |
| | |
| $V_B$ | Gleichgewichtsvolumen |
| $V_{BH}$ | Obere Grenze des Gleichgewichtsvolumen |
| $V_{BL}$ | Unter Grenze des Gleichgewichtsvolumen |
| $\Delta V_B$ | Gleichgewichtvolumenänderung |
| $\Delta h$ | Höhenänderungen |
| $h_B$ | Gleichgewichtsvolumenhöhe |
| $h_{B1}$ | erste Höhe, die von Oberkante des Verdrängerelements gemessenen wird |
| $h_{B2}$ | zweite Höhe, die von Oberkante des Verdrängerelements gemessenen wird |
| $h_{BH}$ | Obere Grenze der Gleichgewichtsvolumenhöhe |
| $h_{BL}$ | Unter Grenze der Gleichgewichtsvolumenhöhe |

(fortgesetzt)

| $h_1$ | Untertauchtiefe |
|---|---|
| $h_2$ | gesamt Eintauchtiefe |
| dn | kleinen Einzelschritte |
| L | Füllstand |
| $F_{res}$ | resultierende Gewichtskraft |
| $F_g$ | Gewichtskraft, Schwerkraft |
| $F_B$ | Auftriebskraft |
| | |

**Patentansprüche**

1. Verfahren zum Betreiben eines elektromechanischen Füllstandsmessgeräts, bei dem ein Verdrängerelement (11) an einem Messdraht (19) derart in eine Flüssigkeit (14) in einen Behälter (15) abgelassen wird, dass in einem Gleichgewichtszustand eine resultierende Gewichtskraft ($F_{res}$) des Verdrängerelements (11) gleich einer Gewichtskraft ($F_G$) des Verdrängerelements (11) abzüglich einer von einem vorgegebenen, im Gleichgewichtszustand in die Flüssigkeit eingetauchten Gleichgewichtsvolumen ($V_B$) abhängigen Auftriebskraft ($F_B$) des Verdrängerelements (11) ist, wobei die resultierende Gewichtskraft ($F_{res}$) ermittelt und mittels entsprechender Änderung der Länge des Messdrahtes (19) auf einem Wert konstant gehalten wird, wobei der Wert derart vorgegeben wird, dass er gleich einem anhand des vorgegebenen Gleichgewichtsvolumens ($V_B$) ermittelten Wert ist, den die resultierende Gewichtskraft ($F_{res}$) in dem Gleichgewichtszustand, in dem das vorgegebene Gleichgewichtsvolumen ($V_B$) in die Flüssigkeit (14) eingetaucht ist, aufweist, wobei mittels der Länge des abgelassenen Messdrahtes (19) der Füllstand (L) der Flüssigkeit (14) ermittelt wird,
**dadurch gekennzeichnet, dass**
eine Funktionsdiagnose ausgeführt wird, wobei

   - eine Dichte ($\rho_{liq}$) der Flüssigkeit (14) und der vorgegebene Wert des Gleichgewichtsvolumens ($V_B$) des Verdrängerelements (11) dem Füllstandsmessgerät als Parameter vorgegeben werden,
   - das Füllstandsmessgerät anhand der Parameter mittels eines Auswertealgorithmus die im Gleichgewichtszustand resultierende Gewichtskraft ($F_{res}$) des Verdrängerelements (11) bestimmt,
   - zur Funktionsdiagnose der vorgegebene Wert des Gleichgewichtsvolumens ($V_B$) des Verdrängerelements (11) mittels einer definierten Gleichgewichtsvolumenänderung ($\Delta V_B$) variiert wird, indem der Parameter des Gleichgewichtsvolumens ($V_B$) in dem Auswertungsalgorithmus des elektromechanischen Füllstandsmessgeräts (1) derart verändert wird, dass entweder das Gleichgewichtsvolumen $V_B$ bis zu einer oberen Grenze des Gleichgewichtsvolumens $V_{BH}$ erhöht wird, wodurch das Verdrängerelement 11 bis zu einer ersten, ausgehend von der Oberkante des Verdrängerelementes 11 gemessenen Höhe $h_{B1}$ abgesenkt wird, oder dass das Gleichgewichtsvolumen $V_B$ bis zu einer unteren Grenze des Gleichgewichtsvolumens $V_{BL}$ erniedrigt wird, wodurch das Verdrängerelement 11 bis zu einer zweiten, ausgehend von der Oberkante des Verdrängerelementes 11 gemessenen Höhe $h_{B2}$ angehoben wird, und
   - die daraus aufgrund des vom Wert des Gleichgewichtsvolumens ($V_B$) abhängigen Werts, auf dem die resultierende Gewichtskraft ($F_{res}$) gehalten wird, resultierende Änderung der Länge des Messdrahtes (19) ermittelt wird.

2. Verfahren nach Anspruch 1,
**dadurch gekennzeichnet,**
**dass** die definierte Gleichgewichtvolumenänderung ($\Delta V_B$) in einem Schritt ausgeführt wird, wodurch eine entsprechend große Änderung der Länge des Messdrahtes (19) bzw. eine entsprechend große Höhenänderungen ($\Delta h$) der Eintauchtiefe ($h_1$) des Verdrängerelements (11) in der Flüssigkeit (14) verursacht wird, die größer oder gleich der kleinstmöglichen Auflösung der Messung des Füllstands (L) des elektromechanischen Füllstandsmessgeräts (1) ist, und die dadurch verursachte große Änderung des Messwertes des Füllstandes (L) von dem Auswertungsalgorithmus entsprechend kompensiert wird.

3. Verfahren nach Anspruch 1,

**dadurch gekennzeichnet,**
**dass** die Gleichgewichtvolumenänderung ($\Delta V_B$) in sehr kleinen Einzelschritten (dn) ausgeführt wird, wodurch entsprechend sehr kleine Änderungen der Länge des Messdrahtes (19) bzw. sehr geringe Höhenänderungen ($\Delta h$) des Verdrängerelements (11) verursacht werden, die kleiner als die kleinstmögliche Auflösung der Messung des Füllstandes (L) des elektromechanischen Füllstandsmessgeräts sind, und somit die Ermittlungen des Füllstandes (L) durch den Auswertungsalgorithmus nicht beeinflusst werden.

4. Verfahren nach Anspruch 3,
**dadurch gekennzeichnet,**
**dass** die Anzahl der kleinen Einzelschritte (dn) von dem Auswertealgorithmus berechnet wird, indem aus der Gleichgewichtvolumenänderung ($\Delta V_B$) unter Kenntnis der Querschnittsfläche (A) des Verdrängerelements (11) die Höhenänderung ($\Delta h$) ermittelt wird und die Anzahl der kleinen Einzelschritte (dn) derart bestimmt wird, dass sie größer als der Quotient aus der Höhenänderung ($\Delta h$) durch die kleinstmögliche Auflösung der Messung des Füllstandes (L) ist.

5. Verfahren nach zumindest einem der vorhergehenden Ansprüche 3 oder 4,
**dadurch gekennzeichnet,**
**dass** kleine Einzelschritte (dn) zu Höhenänderungen ($\Delta h$) in einem Bereich des Verdrängungselements (19) zwischen einer oberen Grenze ($V_{BH}$) und einer unteren Grenze ($V_{BL}$) des Gleichgewichtsvolumens ($V_B$), bei dem die Querschnittsfläche (A) des Verdrängungselements (11) konstant ist, durchgeführt werden.

6. Verfahren nach zumindest einem der vorhergehenden Ansprüche 3, 4 oder 5,
**dadurch gekennzeichnet,**
**dass** die Höhenänderungen ($\Delta h$) in unterschiedlich kleinen Einzelschritten (dn) mit unterschiedlicher Schritthöhe (dh, dh1, dh2) ausgeführt werden.

7. Verfahren nach zumindest einem der vorhergehenden Ansprüche 3, 4, 5 oder 6,
**dadurch gekennzeichnet,**
**dass** die Funktionsdiagnose durch den Auswertungsalgorithmus während des Messbetriebs des elektromechanischen Füllstandsmessgeräts (1) kontinuierlich durchgeführt wird und diese gegenseitig nicht beeinflusst werden, indem das Verdrängungselement (11) stetig um die Höhenänderungen ($\Delta h$) in kleinen Einzelschritten (dn) abgesenkt und angehoben wird.

8. Verfahren nach zumindest einem der vorhergehenden Ansprüche,
**dadurch gekennzeichnet,**
**dass** mittels dieser Funktionsdiagnose des elektromechanischen Füllstandsmessgeräts (1) die Bewegung des Servomotors (3), die Gewichtsmessung des Verdrängungselementes (11), die Bewegung der Messtrommel (27) und des Verdrängungselementes (11), eingegebene Parameter ($V_B$, A) zum aktuell am Messdraht (19) angehängten Verdrängungselement (11), die Sensorelektronik (18), die Hauptelektronik (17) und der Auswertungsalgorithmus überprüft und überwacht werden.

**Claims**

1. Procedure to operate an electromechanical level transmitter, wherein a displacer element (11) attached to a measuring wire (19) is lowered into a liquid (14) in a container (15) in such a way that, in a state of equilibrium, a resulting weight force ($F_{res}$) of the displacer element (11) is equal to a weight force ($F_G$) of the displacer element (11) minus a buoyancy force ($F_B$) of the displacer element (11) that depends on a predefined equilibrium volume ($V_B$) when immersed into the liquid in the state of equilibrium, wherein the resulting weight force ($F_{res}$) is determined and kept constant at a value by means of a corresponding variation in the length of the measuring wire (19), wherein the value is predefined in such a way that it is equal to a value determined using the predefined equilibrium volume ($V_B$), said value being the value of the resulting weight force ($F_{res}$) in the state of equilibrium in which the predefined equilibrium volume ($V_B$) is immersed into the liquid (14), wherein the level (L) of the liquid (14) is determined by means of the length of the lowered measuring wire (19),
**characterized in that**
operation diagnosis is performed, wherein

   - a density ($\rho_{liq}$) of the liquid (14) and the predefined value of the equilibrium volume ($V_B$) of the displacer element (11) are specified as parameters for the level transmitter,

- wherein, on the basis of the parameters, the level transmitter uses an evaluation algorithm to determine the resulting weight force ($F_{res}$) of the displacer element (11) in the state of equilibrium,

- wherein, for the purpose of operation diagnosis, the predefined value of the equilibrium volume ($V_B$) of the displacer element (11) is varied with a defined change in the equilibrium volume ($\Delta V_B$) by changing the parameter of the equilibrium volume ($V_B$) in the evaluation algorithm of the electromechanical level transmitter (1) in such a way that either the equilibrium volume ($V_B$) is increased up to an upper limit of the equilibrium volume ($V_{BH}$), wherein the displacer element (11) is lowered to a first height $h_{B1}$ measured from the upper edge of the displacer element (11), or that the equilibrium volume ($V_B$) is reduced to a lower limit of the equilibrium volume ($V_{BL}$), causing the displacer element (11) to be raised up to a second height $h_{B2}$ measured from the upper edge of the displacer element (11), and

- the resulting change in the length of the measuring wire (19) is determined on the basis of the value depending on the value of the equilibrium volume ($V_B$) at which the resulting weight force ($F_{res}$) is maintained.

2. Procedure as claimed in Claim 1,
   **characterized in that**
   the defined change in equilibrium volume ($\Delta V_B$) is performed in one step, said change causing a correspondingly large change in the length of the measuring wire (19) or a correspondingly large change in the height ($\Delta h$) of the immersion depth ($h_1$) of the displacer element (11) in the liquid (14), which is greater than or equal to the smallest possible resolution of the measurement of the level (L) of the electromechanical level transmitter (1), and wherein the resulting large change in the measured value of the level (L) is compensated accordingly by the evaluation algorithm.

3. Procedure as claimed in Claim 1,
   **characterized in that**
   the change in the equilibrium volume ($\Delta V_B$) is performed in very small individual steps (dn), as a result of which corresponding very small changes in the length of the measuring wire (19) or very small changes in the height ($\Delta h$) of the displacer element (11) are caused which are smaller than the smallest possible resolution of the measurement of the level (L) of the electromechanical level transmitter and, therefore, the determination of the (L) is not influenced by the evaluation algorithm.

4. Procedure as claimed in Claim 3,
   **characterized in that**
   the number of small individual steps (dn) is calculated by the evaluation algorithm by determining the change in height ($\Delta h$) from the change in the equilibrium volume ($\Delta V_B$) with knowledge of the cross-sectional area (A) of the displacer element (11), and wherein the number of small individual steps (dn) is determined in such a way that it is greater than the quotient from the change in the height ($\Delta h$) divided by the smallest possible resolution of the measurement of the level (L).

5. Procedure as claimed in at least one of the previous Claims 3 or 4,
   **characterized in that**
   small individual steps (dn) for changes in height ($\Delta h$) are performed in a range of the displacer element (11) between an upper limit ($V_{BH}$) and a lower limit ($V_{BL}$) of the equilibrium volume ($V_B$) at which the cross-sectional area (A) of the displacer element (11) is constant.

6. Procedure as claimed in at least one of the previous Claims 3, 4 or 5,
   **characterized in that**
   the changes in height ($\Delta h$) are performed in different small individual steps (dn) with a variable step height (dh, dh1, dh2).

7. Procedure as claimed in at least one of the previous Claims 3, 4, 5 or 6,
   **characterized in that**
   the operation diagnosis is continuously performed by the evaluation algorithm while the electromechanical level transmitter (1) is in measuring operation, and **in that** there is no mutual influencing **in that** the displacer element (11) is continuously raised and lowered in small individual steps (dn) by the changes in height ($\Delta h$).

8. Procedure as claimed in at least one of the previous claims,
   **characterized in that**

the movement of the servomotor (3), the weight measurement of the displacer element (11), the movement of the measurement drum (27) and of the displacer element (11), parameters ($V_B$, A) entered for the displacer element (11) currently attached to the measuring wire (19), the sensor electronics (18), the main electronics (17) and the evaluation algorithm are checked and monitored on the basis of this operation diagnosis of the electromechanical level transmitter (1).

**Revendications**

1. Procédé destiné à l'exploitation d'un transmetteur de niveau électromécanique, pour lequel un élément de déplacement (11) accroché à un fil de mesure (19) est abaissé dans un liquide (14) au sein d'un réservoir (15) de telle sorte que, dans un état d'équilibre, un poids résultant ($F_{res}$) de l'élément de déplacement 11) est égal à un poids ($F_G$) de l'élément de déplacement (11) après déduction d'une force ascensionnelle ($F_B$) de l'élément de déplacement (11), qui dépend d'un volume d'équilibre prédéterminé ($V_B$) immergé dans le liquide à l'état d'équilibre, le poids résultant ($F_{res}$) étant déterminé et maintenu constant à une valeur au moyen d'une variation correspondante de la longueur du fil de mesure (19), la valeur étant prédéfinie de telle sorte qu'elle soit égale à une valeur déterminée au moyen du volume d'équilibre prédéterminé ($V_B$), valeur que présente le poids résultant ($F_{res}$) à l'état d'équilibre, dans lequel le volume d'équilibre prédéterminé ($V_B$) est immergé dans le liquide (14), le niveau (L) du liquide (14) étant déterminé au moyen de la longueur du fil de mesure (19) abaissé,
   **caractérisé**
   **en ce qu'**une fonction de diagnostic est exécutée, pour laquelle

   - une densité ($\rho_{liq}$) du liquide (14) et la valeur prédéfinie du volume d'équilibre ($V_B$) de l'élément de déplacement (11) sont spécifiées au transmetteur de niveau en tant que paramètres,
   - le transmetteur de niveau détermine sur la base des paramètres, au moyen de l'algorithme d'évaluation, le poids résultant ($F_{res}$) de l'élément de déplacement (11) à l'état d'équilibre,
   - pour la fonction de diagnostic, la valeur prédéfinie du volume d'équilibre ($V_B$) de l'élément de déplacement (11) est variée au moyen d'une modification définie du volume d'équilibre ($\Delta V_B$), **en ce que** le paramètre du volume d'équilibre ($V_B$) est modifié dans l'algorithme d'évaluation du transmetteur de niveau électromécanique (1) de telle manière que le volume d'équilibre ($V_B$) est augmenté jusqu'à une limite supérieure du volume d'équilibre ($V_{BH}$), ce par quoi l'élément de déplacement (11) est abaissé jusqu'à une première hauteur $h_{B1}$ mesurée à partir du bord supérieur de l'élément de déplacement (11), ou que le volume d'équilibre ($V_B$) est diminué jusqu'à une limite inférieure du volume d'équilibre ($V_{BL}$), ce par quoi l'élément de déplacement (11) est relevé jusqu'à une deuxième hauteur $h_{B2}$ mesurée à partir du bord supérieur de l'élément de déplacement (11), et
   - la variation de la longueur du fil de mesure (19) en résultant est déterminée sur la base de la valeur dépendant du volume d'équilibre ($V_B$), à laquelle le poids résultant ($F_{res}$) est maintenu.

2. Procédé selon la revendication 1,
   **caractérisé**
   **en ce que** la modification définie du volume d'équilibre ($\Delta V_B$) est exécutée en un seul pas, ce qui provoque en conséquence une modification importante de la longueur du fil de mesure (19) ou des modifications de hauteur ($\Delta h$) importantes de la profondeur d'immersion ($h_1$) de l'élément de déplacement (11) dans le liquide (14), qui sont supérieures ou égales à la plus petite résolution possible de la mesure du niveau (L) du transmetteur de niveau électromécanique (1), et la modification importante, provoquée par ce biais, de la valeur mesurée du niveau (L) étant compensée de façon adéquate par l'algorithme d'évaluation.

3. Procédé selon la revendication 1,
   **caractérisé**
   **en ce que** la modification du volume d'équilibre ($\Delta V_B$) est exécutée en pas individuels très petits (dn), ce qui provoque en conséquence de très petites modifications de la longueur du fil de mesure (19) ou de très petites modifications de hauteur ($\Delta h$) de l'élément de déplacement (11) dans le liquide (14), qui sont inférieures à la plus petite résolution possible de la mesure du niveau (L) du transmetteur de niveau électromécanique et, ainsi, les déterminations du niveau (L) ne sont pas influencées par l'algorithme d'évaluation.

4. Procédé selon la revendication 3,
   **caractérisé**
   **en ce que** le nombre de petits pas individuels (dn) est calculé par l'algorithme d'évaluation en déterminant la

modification de hauteur (∆h) à partir de la modification du volume d'équilibre (∆V$_B$) en connaissant l'aire de la section (A) de l'élément de déplacement (11), et **en ce que** le nombre des petites modifications de hauteur (dn) est défini de telle sorte qu'il soit supérieur au quotient de la modification de hauteur (∆h) par la plus petite résolution possible de la mesure du niveau (L).

5. Procédé selon au moins l'une des revendications précédentes 3 ou 4,
   **caractérisé**
   **en ce que** sont exécutés des pas individuels (dn) pour les modifications de hauteur (∆h) dans une plage de l'élément de déplacement (11) comprise entre une limite supérieure (V$_{BH}$) et une limite inférieure (V$_{BL}$) du volume d'équilibre (V$_B$), dans laquelle l'aire de la section (A) de l'élément de déplacement (11) est constante.

6. Procédé selon au moins l'une des revendications précédentes 3, 4 ou 5,
   **caractérisé**
   **en ce que** les modifications de hauteur (∆h) sont exécutées en différents petits pas individuels (dh) avec une hauteur de pas (dh, dh1, dh2) variable.

7. Procédé selon au moins l'une des revendications précédentes 3, 4, 5 ou 6,
   **caractérisé**
   **en ce que** la fonction de diagnostic est exécutée continuellement par l'algorithme d'évaluation pendant la mesure du transmetteur de niveau électromécanique (1), et ceux-ci ne sont pas influencés mutuellement **en ce que** l'élément de déplacement (11) est abaissé et relevé constamment, en petits pas individuels (dn), par les modifications de hauteur (∆h).

8. Procédé selon au moins l'une des revendications précédentes,
   **caractérisé**
   **en ce que** - au moyen de cette fonction de diagnostic du transmetteur de niveau électromécanique (1) - le mouvement du servomoteur (3), la mesure du poids de l'élément de déplacement (11), le mouvement du tambour de mesure (27) et de l'élément de déplacement (11), le paramètre (V$_B$, A) entré pour l'élément de déplacement (11) actuellement accroché au fil de mesure (19), l'électronique de capteur (18), l'électronique principale (17) et l'algorithme d'évaluation sont contrôlés et surveillés.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2151094
- DE 2401486 B2
- DE 819923
- DE 3942239 A1
- US 3838518 A
- DE 19543352 A1
- WO 7031884 G
- WO 7329766 G
- DE 19730196 A1
- DE 2853360 A1
- US 2005210963 A1
- US 2002038571 A1
- DE 2544038 A1
- DE 202004018047 U1
- DE 1961625 A1
- DE 3721164 A1
- DE 2659416 A1
- WO 2012040017 A2